# EUROPEAN PATENT APPLICATION

(11) **EP 1 411 656 A2**
(43) Date of publication of application: **21.04.2004**
(21) Application number: 03023598.0
(22) Date of filing: 16.10.2003
(51) Int. Cl.: H04B 10/155, H04B 10/18

(54) **Optical duobinary carrier-suppressed RZ transmission system**

(30) Priority: 16.10.2002 KR 2002063123
(71) Applicant: SAMSUNG ELECTRONICS CO., LTD., Suwon-City, Kyungki-do (KR)
(72) Inventor: Lee, Gyu-Woong, Samsung Electronics Co., Ltd., Suwon-city Kyungki-do (KR); Lee, Han-Lim, Samsung Electronics Co., Ltd., Suwon-city Kyungki-do (KR); Oh, Yun-Je, Samsung Electronics Co., Ltd., Suwon-city Kyungki-do (KR); Hwang, Seong-Taek, Samsung Electronics Co., Ltd., Suwon-city Kyungki-do (KR)
(74) Representative: Grünecker, Kinkeldey, Stockmair & Schwanhäusser Anwaltssozietät

(57) **Abstract**

Disclosed is an optical transmission system for transmitting a carrier-suppressed RZ (Return to Zero) signal, using duobinary optical transmission technologies. This system comprises a duobinary signal generator and a carrier-suppressed RZ generator. The duobinary signal generator comprises a duobinary precoder, a modulator driver, a Mach-Zehnder interferometer-type optical intensity modulator, a laser light source for generating a carrier wave, and a wide bandpass filter.

## Description

### BACKGROUND OF THE INVENTION

### 1. Field of the Invention

The present invention relates to an optical transmission system, and more particularly to an optical transmission system for transmitting a carrier-suppressed Return to Zero (RZ) signal based on duobinary optical transmission technology.

### 2. Description of the Related Art

A Dense Wavelength Division Multiplexing (DWDM) optical transmission system is a useful transmission system, currently used for ultra high-speed Internet networks, that utilizes a plurality of wavelengths for performing optical transmission through one optical fiber, thereby increasing the transmission efficiency. As a result, DWDM can transmit a number of optical signals without affecting the transmission speed, thereby increasing the transmission volume. In the case of a conventional optical intensity modulation method using Non-Return-to-Zero (NRZ), radical inter-channel interference and distortion occurs due to a sharp increase in data traffic and increased demand for a high data transmission of more than 40Gbps, making it difficult to increase the transmission capacity at channel-intervals less than 500GHz. Both the high-frequency component of a conventional binary NRZ transmission signal, that is diffused during the modulation of the binary signal, and the DC frequency component thereof, cause non-linearity and dispersion effects in an optical fiber medium, that limit the transmission distance in a high-speed transmission of more than 10Gbps.

A recently developed optical duobinary transmission technology is gaining attention as an attractive alternative optical transmission technology that can overcome the transmission distance limitation caused by chromatic dispersion. A primary advantage of this duobinary transmission technology is that its transmission-spectrum bandwidth is less than that of the general binary transmission technology. In an optical transmission system having such a dispersion limitation, the transmission distance is inversely proportional to the square of the transmission spectrum bandwidth. In other words, if the transmission spectrum bandwidth is reduced by half, the transmission distance is increased four times. In addition, the duobinary transmission spectrum has an advantage in that, because a carrier wave frequency is suppressed, it is possible to overcome the limitation on the output optical power caused by a stimulated Brillouin scattering in an optical fiber.

Further, many researchers are vigorously studying a carrier-suppressed RZ transmission technology in which the DC-frequency component of a binary NRZ transmission signal is suppressed so as to suppress the non-linearity and dispersion effects during the high speed, middle/long distance transmission of more than 10Gbps.

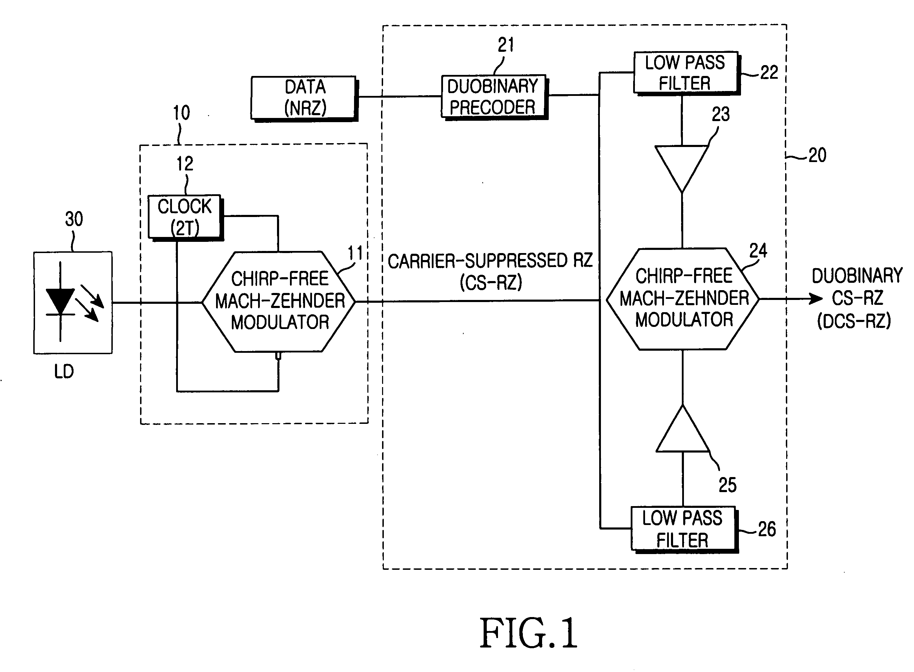

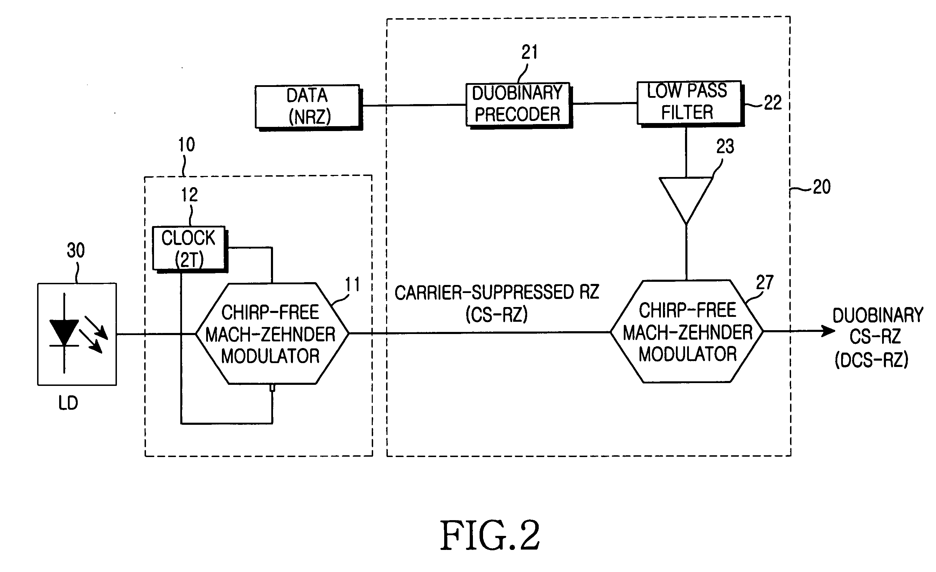

FIGs. 1 and 2 are views showing exemplary configurations of the duobinary carrier-suppressed RZ systems of the prior art. FIG 1 shows such an RZ system employing a Mach-Zehnder optical intensity modulator of Z-cut structure having two arms. FIG 2 shows such an RZ system employing a Mach-Zehnder optical intensity modulator of X-cut structure having a single arm.

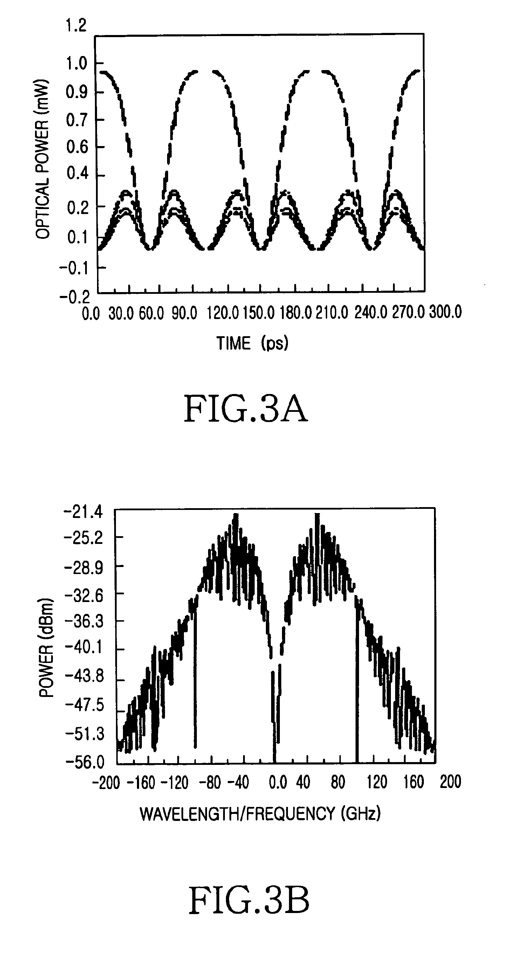

As shown in FIGs. 1 and 2, the duobinary carrier-suppressed RZ (hereinafter, referred to as a DCS-RZ) system comprises a carrier-suppressed RZ signal generator 10 and a duobinary signal generator 20. In FIGs. 1 and 3, the reference numeral 30 indicates a laser light source that generates and outputs a carrier wave.

The carrier-suppressed RZ signal generator 10 generates a carrier-suppressed signal by providing a clock 12, instead of a NRZ data, to an input of a chirp free optical intensity modulator 11, in which the clock 12 has a bit rate of 2T, i.e., half of the bit rate (1/T) of the NRZ data.

In the duobinary signal generator 20, after passing through a differential precoder 21 and an electrical low-pass filter 22, a three-level electric signal is amplified by a modulator driver 23, so as to drive a Mach-Zehnder (MZ) optical modulator 24. Such a duobinary signal generator 20 can be classified into a Z-cut structure as shown in FIG 1 and an X-cut structure as shown in FIG 2, according to the arm structure of the interferometer-type Mach-Zehnder optical intensity modulator 24.

In the case of the Mach-Zehnder optical intensity modulator of the Z-cut structure having two arms, as shown in FIG. 1, the two arms are provided with electrical low-pass filters 22 and 26 and driver amplifiers 23 and 25, respectively, so that the three-level signal can be applied through each of the arms.

In the case of the Mach-Zehnder optical intensity modulator of the X-cut structure having a single arm, as shown in FIG 2, the single arm is provided with an electrical low-pass filter 22 and a driver amplifier 23, so that the three-level signal can be applied through the single arm.

FIG. 3A is a view illustrating the output signals of the RZ systems of FIGs. 1 and 2, and FIG. 3B is a view illustrating the optical spectrum characteristics of the output signals of FIG. 3A. As shown in FIG 3B, seen from a viewpoint of frequency domain, the spectrum of the output modulated signal has no carrier frequency component, and is composed of two portions that have lower and higher frequencies, respectively, relative to the carrier frequency.

However, the duobinary carrier-suppressed-RZ (DCS-RZ) systems of the prior art use the electric low-pass filter for generating the three-level electric signal in order to convert the carrier-suppressed RZ signal to the duobinary signal, and therefore the transmission quality of the system depends on the transmission characteristics of the low pass filter. Further, the transmission characteristics of the system vary depending on the length of pseudo random bit sequences (PRBSs), thereby causing a fatal problem in the system. Specifically, the system margin is remarkably reduced in the case of a 2³¹-1 PRBS, compared to the case of a 2⁷-1 PRBS. Generally, there is a difference between a slope of a signal rising from 0-level to 1-level and a slope of a signal falling from 1-level to 0-level. However, in the case of the duobinary optical transmission system using the electric low-pass filter, parts of the signal having different slopes are combined together to shift from 0-level to 1-level and from 1-level to 0-level, and therefore it has a structural defect in that the jitter of the output waveform is inevitably increased. This is also true in the prior art configuration having the Z-cut or X-cut structure, and such a signal pattern dependency places a limitation on the system margin during a real optical transmission.

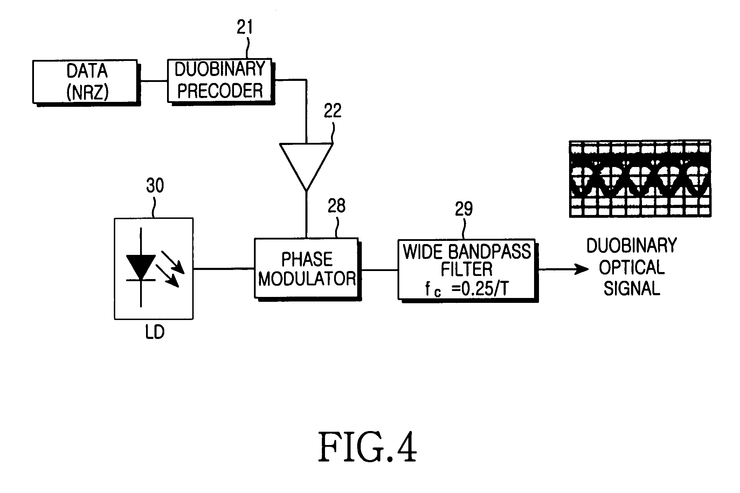

A configuration not using the electric low-pass filter has been proposed in order to overcome such a problem. FIG. 4 is a view showing such a duobinary signal generator that uses a phase modulator and a wide bandpass filter. As shown in FIG 4, this generator comprises the precoder 21, the modulator driver 22 and the laser light source, similarly to the configurations of FIGs. 1 and 2, but uses a phase modulator 28 and a wide bandpass filter 29, instead of the electric low pass filter, in order to generate an output signal having characteristics similar to the output signal of each of the duobinary signal generators of FIGs. 1 and 2.

This prior art is advantageous in that a uniform transmission quality can be obtained, irrespective of the length of the pseudo random bit sequence, but has a problem in that it must use a high-priced phase modulator that is not widely used and is therefore expensive, thereby reducing the price competitiveness of this prior art optical transmission system.

### SUMMARY OF THE INVENTION

The present invention provides an optical transmission system that transmits a carrier-suppressed RZ signal based on a duobinary optical transmission technology, whereby the pseudo random bit sequence (PRBS) does not affect the optical transmission characteristics.

The present invention also provides an optical transmission system that transmits a carrier-suppressed RZ signal, whereby the non-linearity and dispersion characteristics of a high-speed, middle/long distance WDM transmission are improved without the use of an electric low pass filter.

Further, the present invention provides an optical transmission system that transmits a carrier-suppressed RZ signal, wherein the optical intensity/phase modulation is performed by a low-priced Mach-Zehnder interferometer-type optical intensity modulator, avoiding the use of a high-priced phase modulator.

Therefore, in a preferred embodiment, the present invention is an optical transmission system that outputs a duobinary carrier-suppressed RZ (Return to Zero) signal, comprising:
a light source that outputs an optical carrier wave;
a duobinary optical signal generator that receives an NRZ (Non-Return to Zero) signal, modulates the optical carrier wave to an optical signal according to the NRZ signal, and outputs the modulated optical signal; and
a carrier-suppressed RZ signal generator that converts the NRZ signal to an RZ signal in synchronization with a clock,
wherein said duobinary optical signal generator comprises:
a code converter that converts the NRZ signal to a duobinary signal;
a device that receives the duobinary signal and generates a modulator driving signal;
a Mach-Zehnder interferometer-type optical intensity modulator that receives the modulator driving signal and outputs a modulated optical signal, the modulated optical signal being obtained by changing a phase of the optical carrier wave and modulating an optical intensity thereof; and
a wide bandpass filter having a predetermined bandwidth that receives the modulated optical signal from the optical intensity modulator, filters the received optical signal according to the predetermined bandwidth, and outputs a duobinary optical signal.

### BRIEF DESCRIPTION OF THE DRAWINGS

FIG. 1 illustrates an exemplary configuration of a duobinary carrier-suppressed RZ system of the prior art;
FIG. 2 illustrates another exemplary configuration of the duobinary carrier-suppressed RZ system of the prior art;
FIGs. 3A and 3B illustrate the output signal and the optical spectrum characteristics, respectively, of the configurations of FIGs. 1 and 2;
FIG. 4 illustrates an exemplary configuration of a duobinary signal generator of the prior art, that uses a phase modulator and a wide bandpass filter;
FIG. 5 illustrates an embodiment of a DCS-RZ system according to one embodiment of the present invention;
FIGs. 6A to 6D illustrate the conversion procedure of the DCS-RZ output signal according to and embodiment of the present invention;
FIG. 7A illustrates the principle of the modulation operation of the duobinary optical signal generator according to an embodiment of the present invention;
FIG. 7B illustrates the output waveform of the duobinary optical signal generator according to an embodiment of the present invention; and
FIGs. 8A and 8B illustrate the output signal and the optical spectrum characteristics of the DCS-RZ configuration according to an embodiment of the present invention.

### DETAILED DESCRIPTION OF THE PREFERRED EMBODIMENTS

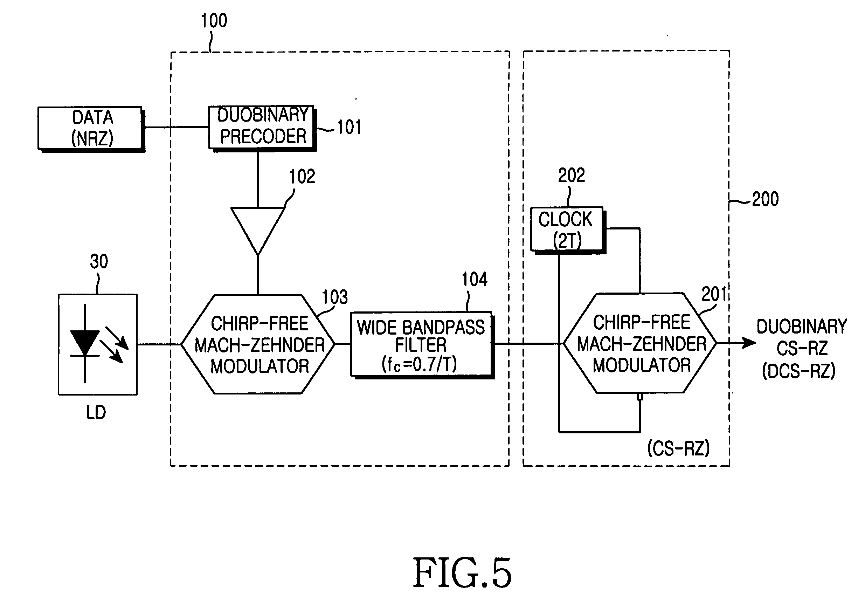

Preferred embodiments of the present invention are described below in detail with reference to FIGs. 5 to 8. In the drawings, the same or similar elements are denoted by the same reference numerals even though they are depicted in different drawings. In the following description, a detailed description of known functions and configurations incorporated therein are omitted when it may make the subject matter of the present invention rather unclear.

As shown in FIG 5, a Duobinary Carrier-Suppressed Return-to-Zero (DCS-RZ ) system, according to one embodiment of the present invention, comprises a duobinary signal generator 100 and a carrier-suppressed RZ generator 200. In one embodiment of the present invention, the signal generator 100 and the RZ generator 200 are positioned at the front and rear end, respectively, but their positions may be reversed.

As shown in FIG. 5, the duobinary signal generator 100 comprises a duobinary precoder 101, a driver amplifier 102, a Mach-Zehnder interferometer-type optical intensity modulator 103, a laser light source 30 that outputs a carrier wave, and a wide bandpass filter 104. The configurations and operations of the precoder 101, the driver amplifier 102, and the laser light source 30 are the same as those of FIGs. 1 to 3.

The present invention is characterized in that a wide bandpass filter 104 is provided to the output of the optical intensity modulator 103 in order to generate a duobinary optical signal, after an optical intensity/phase modulation is performed by an optical intensity modulator 103. In this configuration, because a three-level signal does not occur, the signal characteristics are not degraded in relation to the length of the PRBS.

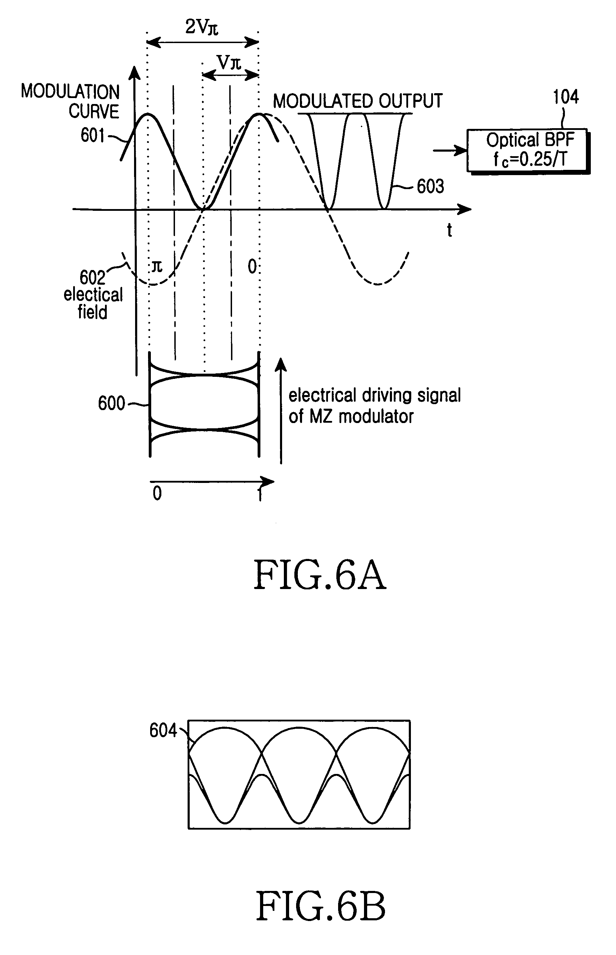

Referring to FIGs. 5, and 6A to 6D, an optical signal (carrier wave) generated from the semiconductor laser 30 is provided to the chirp-free Mach-Zehnder interferometer optical intensity modulator 103. This Mach-Zehnder modulator 103 may have one of a Z-cut and X-cut structure. An NRZ data is encoded by the differential precoder 101, and provided to the driver amplifier 102. In a first conversion step, as represented by a curve in FIG. 6A, an applied voltage corresponding to the binary data 0 or 1 is 2xVπ, where the bias point corresponds to the null point of the modulation curve of this modulator. In this case, a modulated output waveform, as illustrated by a curve 603 in FIG. 6A, is obtained, according to an optical intensity modulation curve 601. Accordingly, a bit 0 or 1 does not experience an intensity modulation, i.e., there is no change of the intensity. However, during the modulation process, the bit 0 or 1 is converted to phase information having a phase difference of 0 or π, referring to an electric field curve 602. That is, the phase information is 'π' when a decoder output is at 0-level, and '0' when it is at 1-level. Accordingly, a typical interferometer-type optical modulator is used to serve as a phase modulator.

In such a manner, after being subject to a phase modulation by the optical intensity modulator, the optical signal passes through the wide bandpass filter 104 having a bandwidth of 0.7/T (1/T is the bit rate of the NRZ data). In this process, the wide bandpass filter 104 serves to perform the same operation as the electric low pass filter 26 in the conventional duobinary transmitter of FIG. 1. Accordingly, the optical signal is converted to a duobinary signal as shown in FIG. 6B through the wide bandpass filter 104. In the present embodiment, as mentioned above, the applied voltage is 2Vπ and the wide bandpass filter 104 has a bandwidth of 0.7/T to generate the duobinary signal, but the bandwidth of the wide bandpass filter, the applied voltage, etc. may be adjusted to other values so as to control the characteristics of the duobinary optical signal.

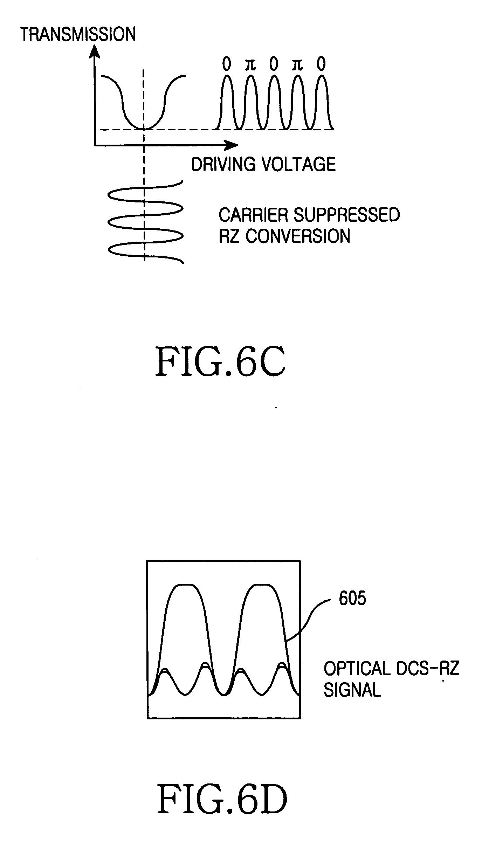

After being modulated to the duobinary signal 604, the optical signal is provided to the chirp-free Mach-Zehnder optical intensity modulator 201 to be converted to the carrier-suppressed RZ signal. As shown in FIG. 6C, a clock 202 having a period half or twice the bit rate (1/T) is provided to the optical intensity modulator 201 at the null point of the transfer curve, so as to convert the modulated NRZ signal entering the modulator 201 to the carrier-suppressed RZ signal as illustrated by a curve 605 in FIG. 6D.

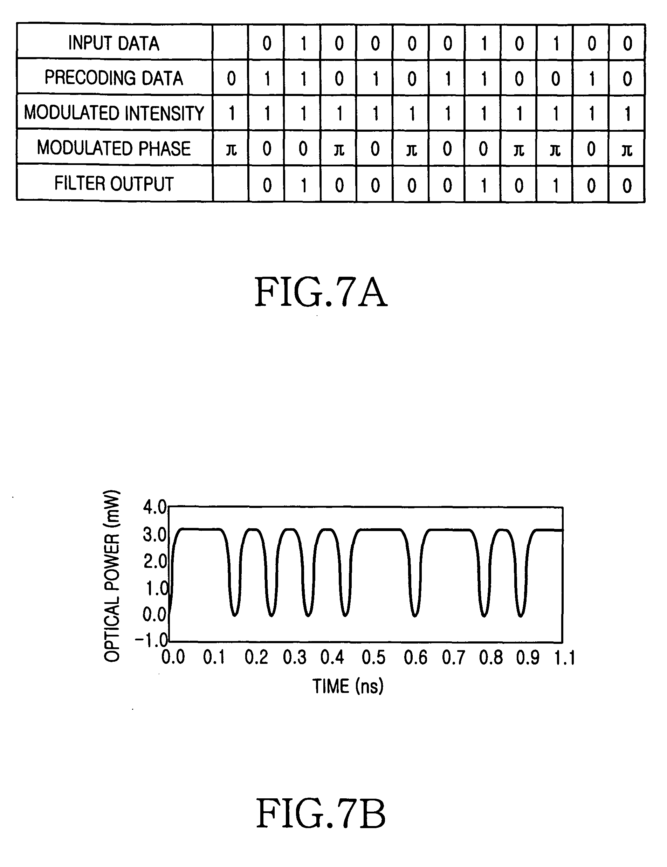

Further, the phase information included in the modulated output waveform 603 as shown in FIG. 6A is described, referring to FIGs. 7A and 7B. FIG. 7A illustrates the principle of the modulation operation of the duobinary optical modulator according to the present invention, and FIG. 7B illustrates the waveform of the output signal of the modulator.

Referring to FIGs. 7A and 7B, all the modulated signals are at 1-level at the moment when the signal is discriminated. However, only when the applied electrical signal shifts from 1-level to 0-level, or from 0-level to 1-level, is the optical output signal brought to 0-level and then returns to 1-level.

Here, it is to be noted that all the modulated signals are at 1-level at a time when the signal is discriminated. This fact differentiates this modulator from the phase modulator in which the optical output signal is always at 1-level.

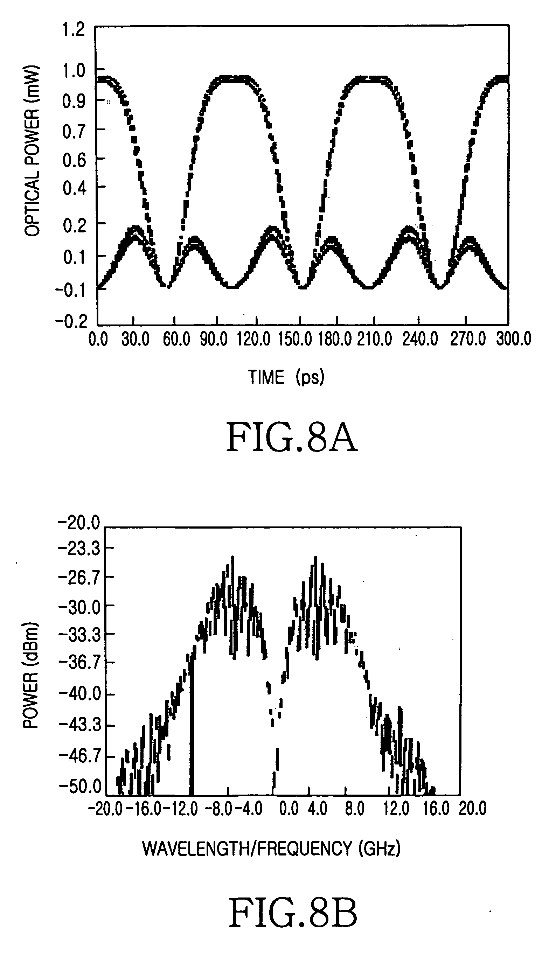

FIG. 8A illustrates the DCS-RZ output signal according to the present invention, and FIG. 8B illustrates the optical spectrum characteristics of the output signal. As shown in FIGs. 8A and 8B, the system according to the present invention has typical DCS-RZ signal characteristics and power spectrum, similar to the output signal results as illustrated in FIGs. 3A and 3B.

As apparent from the above description, the optical transmission system that transmits a duobinary carrier-suppressed RZ signal according to the present invention has advantages in that, because the duobinary optical signal is generated without the use of an electric low pass filter and the pseudo random bit sequence does not affect the transmission characteristics of the system, thereby improving the non-linearity and dispersion characteristics during the high-speed, middle/long distance WDM transmission.

In addition, the system is advantageous in that, because the optical intensity/phase modulation is performed using a low-priced Mach-Zehnder interferometer optical intensity modulator, instead of using a high-priced phase modulator, in order to transmit the carrier-suppressed RZ signal, the system cost is lowered by 30 to 40%, compared to the optical transmission system using the phase modulator, thereby increasing the price competitiveness of the optical transmission system.

Although preferred embodiments of the present invention have been disclosed for illustrative purposes, those skilled in the art will appreciate that various modifications, additions and substitutions are possible, without departing from the scope and spirit of the invention as disclosed in the accompanying claims. In addition, the present invention may be applied to any other optical transmission system using the DCS-RZ optical transmission technology, such as an optical transponder, transmitter, and transceiver, a SONET/SDH and Ethernet transmission system, etc.

Accordingly, the scope of the present invention is not limited to the description of the embodiments, but is defined by the accompanying claims as well as equivalents thereof.

## Claims

1. An optical transmission system for outputting a duobinary carrier-suppressed return- to-zero signal, the system comprising:
a light source (30) that outputs an optical carrier wave;
a duobinary optical signal generator (100) that receives a non-return to zero signal, modulates the optical carrier wave to an optical signal according to the non-return to zero signal, and outputs the modulated optical signal; and
a carrier-suppressed return to zero signal generator that converts the non-return to zero signal signal to a return to zero signal in synchronization with a clock (202).

2. The optical transmission system as set forth in claim 1, wherein the duobinary optical signal generator (100) comprises an interferometer-type optical intensity modulator (103).

3. The optical transmission system as set forth in claim 2, wherein the interferometer-type optical intensity modulator (103) is a Mach-Zehnder optical intensity modulator (103) having a Z-cut structure having dual arms.

4. The optical transmission system as set forth in claim 2, wherein the interferometer-type optical intensity modulator is a Mach-Zehnder interferometer-type optical intensity modulator having an X-cut structure having a single arm.

5. The optical transmission system as set forth in one of the previous claims, wherein characteristics of the output signal vary depending on an applied voltage of the Non-Return to Zero signal.

6. The optical transmission system as set forth in one of the claims 2 to 5, wherein said duobinary optical signal generator (100) further comprises:
a code converter (101) that converts the non-return to zero signal to a duobinary signal;
a device (102) that receives the duobinary signal, and generates a modulator driving signal; and
a wide bandpass filter (104) having a predetermined bandwidth that receives the modulated optical signal from the optical intensity modulator (103), filters the received optical signal according to the predetermined bandwidth, and outputs a duobinary optical signal,.
whereby said interferometer-type optical intensity modulator (103) receives the modulator driving signal and outputs a modulated optical signal, the modulated optical signal being obtained by changing a phase of the optical carrier wave and modulating an optical intensity thereof.

7. The optical transmission system as set forth in claim 6 [8], wherein the duobinary optical signal generator (100) is adapted in a way that characteristics of the output signal vary depending on the bandwidth of the wide bandpass filter (104).

8. An optical transmission system for outputting a duobinary carrier-suppressed return-to-zero signal, the system comprising:
a light source (90) to output an optical carrier wave;
a carrier-suppressed return to zero signal generator (200) to receive the optical carrier wave and generate a carrier-suppressed return to zero signal therefrom in synchronization with a clock (202);
a duobinary optical signal generator (100) that receives a Non-Return to Zero signal and the carrier-suppressed return to zero signal and outputs a modulated optical signal.

9. The optical transmission system as set forth in claim 8 wherein, said optical signal generator (100) comprises:
a code converter (101) that converts the non-return to zero signal to a duobinary signal;
a device (102) that receives the duobinary signal and generates a modulator driving signal;
a Mach-Zehnder interferometer-type optical intensity modulator (103) that receives the modulator driving signal, the carrier-suppressed return to zero signal and outputs a modulated optical signal, the modulated optical signal being obtained by changing a phase of the carrier-suppressed return to zero signal and modulating an optical intensity thereof; and
a wide bandpass filter (104) having a predetermined bandwidth that receives the modulated optical signal from the optical intensity modulator and filters the received optical signal according to the predetermined bandwidth, and outputs a duobinary optical signal.

10. The optical transmission system as set forth in claim 9, wherein the Mach-Zehnder interferometer-type optical intensity modulator (103) is an optical intensity modulator having a Z-cut structure having dual arms.

11. The optical transmission system as set forth in claim 9, wherein Mach-Zehnder interferometer-type optical intensity modulator is an optical intensity modulator having a X-cut structure having a single arm.

12. The optical transmission system as set forth in one of claims 8 to 11, wherein the duobinary optical signal generator (100) is adapted in a way that characteristics of the output signal vary depending on an applied voltage of the non-return to zero signal.

13. The optical transmission system as set forth in one of claims 8 to 11, wherein the duobinary optical signal generator (100) is adapted in a way that characteristics of the output signal vary depending on the bandwidth of the wide bandpass filter (104).
